# EUROPEAN PATENT SPECIFICATION

(11) **EP 2 344 428 B1**
(45) Date of publication and mention of the grant of the patent: **11.12.2013**
(21) Application number: 09822278.9
(22) Date of filing: 21.10.2009
(51) Int. Cl.: C04B 35/58

(54) **MOLYBDENUM SILICIDE COMPOSITE MATERIAL**
MOLYBDÄNSILIZID-VERBUNDWERKSTOFF
MATÉRIAU COMPOSITE DE SILICIURE DE MOLYBDÈNE

(30) Priority: 22.10.2008 SE 0802257
(43) Date of publication of application: 20.07.2011
(73) Proprietor: Sandvik Intellectual Property AB, 811 81 Sandviken (SE)
(72) Inventor: SUNDBERG, Mats, S-722 46 Västerås (SE); Ström, Erik, S-725 91 Västerås (SE)
(86) International application number: PCT/SE2009/051199
(87) International publication number: WO 2010/047654

(56) References cited:
- EP-A1- 1 114 878
- WO-A1-01/36347
- GB-A- 780 735
- STROM E. ET AL: 'Low temperature oxidation of Cr-alloyed MoSi2' TRANSACTIONS OF NONFERROUS METALS SOCIETY OF CHINA vol. 17, no. 6, 2007, pages 1283 - 1286, XP022935706

## Description

### Field of Invention

The present invention relates to a molybdenum silicide composite material wherein a portion of Mo is substituted with Cr forming the silicide Mo₁₋ₓCrₓSi₂.

### Background of the Invention

Molybdenum silicide based materials are well known for high temperature applications such as in furnaces and parts in turbines and engines. The materials typically have good mechanical properties at high temperatures, above 900°C for example, as well as good oxidation and corrosion characteristics. The latter ascribed to the formation of a protective oxide layer. However, in common with most intermetallic materials, molybdenum silicide based materials typically have low ductility and low fracture toughness at lower temperatures, e.g. at room temperature.

In order to improve properties, in particular at room temperature, a lot of interest has been given to various composite materials comprising MoSi₂ and for example SiC, AlO₃ and ZrO₂. Also reinforced materials comprising particles or whiskers have been investigated. For example US 5,640,666 discloses a molybdenum disilicide based material reinforced with SiC.

US 6,482,759 discloses a composite material comprising of MoSi₂ and 5-30 vol% ZrO₂. It is discussed how the addition of ZrO₂ enhances the mechanical properties as compared to monolithical molybden silicide, but at the same time reduces the corrosion resistance. An addition of 8-12 vol% MoB is demonstrated to improve the formation of the protective oxide layer, and hence possibly improve oxidation and corrosion resistance. By keeping the oxygen content low the formation of ZrSiO₄ is suppressed during the sintering. ZrSiO₄ is known to lower the strength of the final product. The effect believed to relate to ZrSiO₄ forming a layer on the ZrO₂ particles.

MoSi₂ as been alloyed with metals such as V, Ti, Nb, Ta and Al for the purpose of improving the mechanical properties at both high and low temperatures. In *"*Yield Stress and Dislocation Structure of MoSi2 and (Mo,Cr)Si2 Single Crystals" by Y. Umakoshi et al, Conf. proceed. "High Temperature Aluminides and Intermetallics", The Mineral, Metals & Materials Society 1990, the addition of Cr to MoSi₂ single crystals is studied. An alloy (Mo_{0.97},Cr_{0.03})Si₂ is thoroughly investigated. An improvement in ductility is demonstrated, however, the effect is said to be small. Cr is stated to be soluble in MoSi₂ up to 0.08 at% ((Mo_{0.92},Cr_{0.08})Si₂). In *"*Low temperature oxidation of Cr-alloyed MoSi2" by E. Ström et al, Transaction of Nonferrous Metals Society of China, 2007: 17(6) 1282-1286, the oxidation properties of the alloys (Mo_{0.90},Cr_{0.10})Si₂ and (Mo_{0.85},Cr_{0.15})Si₂ were studied at low temperatures, i.e. below 450°C. The purpose of the investigation, which is reflected in the choice of temperature range, is pesting control. It should be noted that Cr is commonly considered as a problematic additive for high temperature applications (above 1100°C) due to vaporization, especially in the presence of even very low levels of moisture.

Although interesting results have been reported it can be questioned if the new materials are suitable for industrial production and/or usage. For example: composites comprising whiskers are expensive; long time stability and/or reproducibility has been an issue in many cases. In fact, most of the reported composite materials have in practice not shown better properties than commercially available monolithical molybdenum disilicide materials such as KANTHAL SUPER™.

### Summary of the Invention

The objective problem is to provide a molybdenum silicide based material that combines good oxidation and corrosion resistance at high temperatures with good mechanical properties at both high temperatures and room temperature. In addition the material need to be producible at a reasonable cost, i.e. both the cost of the components as well as the production cost should be comparable to that associated with today commercially available products.

The problem is solved by the composite material as defined in claim 1 and by the heater element as defined in claim 6.

The present invention provides a composite material based on a disilicide comprising molybdenum and zirconium dioxide; ZrO2. The composite material comprises 10-20 vol% ZrO2 balanced with (Mo1-xCrx)Si2. In the disilicide (Mo1-xCrx)Si2 a portion x of the molybdenum is substituted by Chromium, Cr, in the range 0.08<x≤0.15, preferably 0.10≤x≤0.12. Optionally the composite material may comprise Tungsten, W, and/or Rhenium, Re.

The heater element according to the invention comprises at least one part that is made from the inventive composite material. The heater element can be readily be produced in various shapes and sizes and advantageously replace exiting heater elements. Suitable applications include, but is not limited to heating arrangements for heating above 900°C.

Thanks to the inventive composite material a material for high temperature applications with high oxidation and corrosion resistance, as well as good and reproducible mechanical properties is provided. The composite material has the further advantage that small particles can be used during production.

Embodiments of the invention are defined in the dependent claims. Other objects, advantages and novel features of the invention will become apparent from the following detailed description of the invention when considered in conjunction with the accompanying drawings and claims.

### Brief description of the drawings

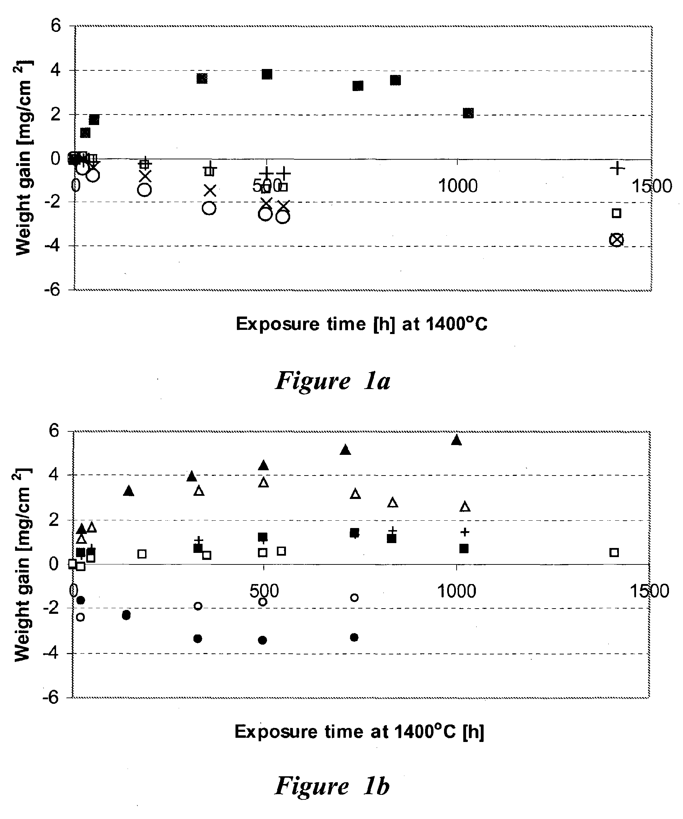

The invention will be described in detail with reference to the figures, wherein Figure 1a-b are graphs illustrating the weight gain as a function of exposure time at 1400°C.

### Detailed Description of the invention

The material according to the present invention is a composite of molybdenum disilicide, MoSi₂, and zirconium dioxide, ZrO₂, wherein a portion of the molybdenum is substituted by chromium, Cr. The composite material comprises 10-20 vol% ZrO₂ balanced with (Mo₁₋ₓCrₓ)Si₂. The range of Cr should be 0.08<x≤0.15, preferably 0.10≤x≤0.12. It should be noted that the range of Cr that is found to improve oxidation, as well as mechanical properties of the composite material, is above the x=0.08 that is believed to be the maximum amount of Cr that is soluble in MoSi₂.

The composite material according to the present invention may be produced with methods and arrangements well known in the art of powder technology as described in for example US 6,482,759. The method of production comprises the steps of mixing the constituents, forming a green body and sintering. The reproducibility with regards to mechanical properties makes it possible to use sintering without pressure. Alternatively also Hot Isostatic Pressing, HIP, can be used.

A number of samples with varying Cr and ZrO₂ content were prepared and compared with reference samples containing no Cr, but ZrO₂, and with reference samples of pure MoSi₂. Table 1 summarize the samples used in the investigation.

**Table 1: Investigated samples**

| Material | Denotation in Fig. 1a. | Denotation in Fig. 1b. |
|---|---|---|
| MoSi₂ | ■ | |
| MoSi₂+15% ZrO₂ | | ○ and ● |
| Mo_{0.92}Cr_{0.08}Si₂ | □ | |
| Mo_{0.90}Cr_{0.10}Si₂ | + | |
| Mo_{0.88}Cr_{0.12}Si₂ | x | |
| Mo_{0.85}Cr_{0.15}Si₂ | ○ | |
| Mo_{0.92}Cr_{0.08}Si₂+15% ZrO₂ | | + |
| Mo_{0.90}Cr_{0.10}Si₂+15% ZrO₂ | | ■ and □ |
| Mo_{0.88}Cr_{0.12}Si₂+15% ZrO₂ | | ▲ and △ |

The surprising and positive effect of substituting with Cr in the amounts according to the present invention with regards to oxidation properties is illustrated in Table 2, wherein the oxide thickness after 100h exposure in 1400°C is reported, and in the graphs of Fig. 1a-b, wherein the weight gain is plotted as a function of exposure time at 1400°C. The graph of Fig. 1a illustrates the preferred parabolic oxidation behaviour of pure MoSi₂ (■). Substitution with Cr seems to have substantial deteriorating effect on the oxidation (Mo_{0.92}Cr_{0.08}Si₂: □, Mo_{0.90}Cr_{0.10}Si₂: +, Mo_{0.88}Cr_{0.12}Si₂: x, Mo_{0.85}Cr_{0.15}Si₂: ○). In the graph of Fig. 1b it can be seen that the composite MoSi₂+15% ZrO₂ (○ and ●) has a less favorable oxidation behavior, whereas if Mo is substituted with Cr in the amounts according to the present invention in combination with 15% ZrO₂, oxidation behavior similar to that of pure MoSi₂ is regained (Mo_{0.92}Cr_{0.08}Si₂+15% ZrO₂:+, Mo_{0.90}Cr_{0.10}Si₂+15% ZrO₂: ■ and □, Mo_{0.88}Cr_{0.12}Si₂+15% ZrO₂: ▲ and Δ). The thickness of the oxide layer as well as the quality of the oxide layer is investigated with SEM. (Mo_{0.90}Cr_{0.10})Si₂ exhibit a thin and uniform oxide layer. Low Cr values or no Cr results in a comparably high oxidation rate for the MoSi₂-ZrO₂ composite material. Higher Cr values, x>0.15 leads to gradual reduction of the positive effects, i.e. the oxidation rate increases and an increase risk of flaking is expected. The effect of substituting Mo with Cr in the range 0.08-0.15, and in particular 0.10-0.12 is clearly visible in Fig. 1a-b. Samples containing Cr, but not the MoSi₂-ZrO₂ composite exhibit an unwanted behaviour with a continuous and increasing weight loss over time. On the other hand, the MoSi₂-ZrO₂ composite exhibit the expected oxidation behaviour. The samples based on the MoSi₂-ZrO₂ composite and with Cr substituting Mo in the range according to the present invention exhibit similar well behaved parabolic oxidation curves as the reference sample of pure MoSi₂. It is thus demonstrated that both a MoSi₂-ZrO₂ composite and a Cr substitution is required to achieve the positive effects on the oxidation properties.

**Table 2: Oxide thickness after 100 h exposure in air at 1400°C**

| Material | Oxide thickness [µm] |
|---|---|
| MoSi₂ | 25 |
| MoSi₂+15% ZrO₂ | 110 |
| Mo_{0.90}Cr_{0.10}Si₂+15% ZrO₂ | 12 |
| Mo_{0.85}Cr_{0.15}Si₂+15% ZrO₂ | 25-35 |

To illustrate the mechanical properties hardness and fracture toughness are measured by conventional methods, and the result is presented in Table 3. The composite material according to the invention has a high reproducibility with regards to fracture toughness. This is of high importance in the production of the material since smaller particles can be used without a reduction of the mechanical properties. This indicates that pressureless sintering can be used, and still full density can be achieved. This opens up for simple and cost effective production methods. The effect can probably be described to the reduction of formation of ZrSiO₄ at grain boundaries. The effect persists also after heat treatment, 100h in 1400°C, as can be seen in Table 4. This is in contrast to other materials such as Si₃N₄, exhibiting a significant reduction in fracture toughness.

**Table 3: Hardness and fracture toughness**

| Material | HV₁₀ [GPa] | Kc [MPa·m^{1/2}] |
|---|---|---|
| MoSi₂ | 9.5±0.3 | 3.0±0.3 |
| MoSi₂+15% ZrO₂ | 8.3±0.2 | 5.5±0.7 |
| Mo_{0.97}Cr_{0.03}Si₂+15% ZrO₂ | 8.1±0.2 | 3.1±0.2 |
| Mo_{0.90}Cr_{0.10}Si₂+15% ZrO₂ | 7.3±0.2 | 6.4±0.7 |
| Mo_{0.85}Cr_{0.15}Si₂+15% ZrO₂ | 6.1±0.1 | 5.2±0.5 |

**Table 4: Hardness and fracture toughness after 100 h exposure in air at 1400°C**

| Material | HV₁₀ [GPa] | Kc [MPa·m^{1/2}] |
|---|---|---|
| Si₃N₄ before oxidation | 13.5±0.5 | 4.7±0.3 |
| Si₃N₄ after oxidation | 13.2±0.9 | 4.0±0.3 |
| Mo_{0.90}Cr_{0.10}Si₂+15% ZrO₂ before oxidation | 6.2±0.1 | 5.2±0.5 |
| Mo_{0.90}Cr_{0.10}Si₂+15% ZrO₂ after oxidation | 6.0±0.3 | 5.6±0.7 |
| Mo_{0.85}Cr_{0.15}Si₂+15% ZrO₂ before oxidation | 6.0±0.2 | 5.3±0.7 |
| Mo_{0.85}Cr_{0.15}Si₂+15% ZrO₂ after oxidation | 5.8±0.3 | 4.2±0.6 |

It is in US 6,482,759 described that an addition of SiC to the composite material MoSi₂-ZrO₂ gives an improved rupture strength at high temperatures. According to one embodiment of the present invention SiC is added to the (Mo₁₋ₓCrₓ)Si₂- ZrO₂ composite. Preferably the composite material according to one embodiment of the invention comprises 3-10 vol% SiC. SiC can be added as a powder before sintering. Alternatively C-powder is added and SiC is formed during the sintering process.

The composite material according to the present invention may additionally comprise Tungsten, W, and/or Rhenium, Re as further substitutions to Mo. Such additions may further enhance mechanical and/or oxidation properties.

Both stabilized and unstabilized ZrO₂ can be used in the production of the composite material. As discussed in US 6,482,759 unstabilized ZrO₂ or at least that a portion of the ZrO₂ is unstabilized increases the toughness around room temperature. Accordingly, it is preferred to use at least portion unstabilized ZrO₂ in the production of the composite material according to the invention.

The composite material according to the present invention is advantageously utilized as the heating material in heating elements. A heating element according to the invention comprises at least a part that is formed from the composite material according to the invention. A typical heating element is a two-shank U-shaped element, with a heating zone of the heating material of one diameter welded to terminals of another diameter.

## Claims

1. A composite material comprising molybdenum disilicide and zirconium dioxide, **characterized in that** a portion of the molybdenum is substituted by chromium according to (Mo₁₋ₓCrₓ)Si₂ wherein 0.08<*x*≤0.15, and the composite material comprises 10-20 volume % ZrO₂ balanced with (Mo₁ₓCrₓ)Si₂.

2. The composite material according to claim 1, **wherein** *x* is in the range 0.10≤*x*≤0.12.

3. The composite material according to any of claims 1-2, **wherein** the composite material further comprises 3-10 volume % SiC.

4. The composite material according to any of claims 1-3, **wherein** unstabilized ZrO₂ was utilised in the production of the composite material.

5. The composite material according to any of claims 1-4, **wherein** the molybdenum in the molybdenum disilicide is partly substituted with tungsten and/or Re.

6. Heater element **characterized in that** at least a part of the heating element comprises the composite material according to any of claims 1-5.

## Patentansprüche

1. Verbundwerkstoff, welcher Molybdändisilizid und Zirkoniumdioxid aufweist, **dadurch gekennzeichnet, dass** ein Teil des Molybdäns in der Form (Mo₁₋ₓCrₓ)Si₂ durch Chrom ersetzt ist, wobei 0,08<x≤0,15, und der Verbundwerkstoff 10-20 Vol.-% ZrO₂ aufweist, wobei der verbleibende Rest aus (Mo₁₋ₓCrₓ)Si₂ besteht.

2. Verbundwerkstoff nach Anspruch 1, wobei x in dem Bereich 0,10≤x≤0,12 liegt.

3. Verbundwerkstoff nach einem der Ansprüche 1 bis 2, wobei der Verbundwerkstoff ferner 3-10 Vol.-% SiC aufweist.

4. Verbundwerkstoff nach einem der Ansprüche 1 bis 3, wobei nicht stabilisiertes ZrO₂ bei der Herstellung des Verbundwerkstoffs verwendet wurde.

5. Verbundwerkstoff nach einem der Ansprüche 1 bis 4, wobei das Molybdän in dem Molybdändisilizid teilweise durch Wolfram und/oder Re ersetzt ist.

6. Heizelement, **dadurch gekennzeichnet, dass** zumindestens ein Teil des Heizelements den Verbundwerkstoff nach einem der Ansprüche 1 bis 5 aufweist.

## Revendications

1. Un matériau composite comprenant du disiliciure de molybdène et du dioxyde de zirconium, **caractérisé en ce qu'**une partie du molybdène est remplacée par du chrome selon (Mo₁₋ₓ Crₓ)Si₂, où 0,08 < x ≤ 0,15, et le matériau composite comprend 10-20% en volume de ZrO₂ en rapport avec (Mo₁₋ₓ Crₓ)Si₂.

2. Le matériau composite selon la revendication 1, dans lequel x est compris dans la plage de 0. 10 ≤ x ≤0.12.

3. Le matériau composite selon l'une quelconque des revendications 1 -2, dans lequel le matériau composite comprend en outre 3-10% en volume de SiC.

4. Le matériau composite selon l'une quelconque des revendications 1 -3, dans lequel du ZrO₂ non stabilisé a été utilisé pour la production du matériau composite.

5. Le matériau composite selon l'une quelconque des revendications 1 -4, dans lequel le molybdène du disiliciure de molybdène est partiellement substitué par du tungstène et/ou du Re.

6. Elément chauffant **caractérisé en ce que** au moins une partie de l'élément de chauffage comprend le matériau composite selon l'une quelconque des revendications 1-5.
